# EUROPEAN PATENT APPLICATION

(11) **EP 1 582 485 A1**
(43) Date of publication of application: **05.10.2005**
(21) Application number: 04076035.7
(22) Date of filing: 31.03.2004
(51) Int. Cl.: B65G 67/60, B63B 27/22

(54) **Method for loading a vessel as well as installation for effecting such a method**

(71) Applicant: Ertsoverslagbedrijf Europoort C.V., 3199 NB Europoort, Rotterdam (NL)
(72) Inventor: Boke, Tobias, 46569 Hunxe (DE)
(74) Representative: van Westenbrugge, Andries

(57) **Abstract**

For loading a vessel (1) it is proposed to use a loading device (3,4) such as a conveyor belt assembly, which can move in longitudinal direction over a quay (2) alongside a vessel to be loaded. During a first movement alongside said vessel predetermined quantities of material are loaded in the vessel. During the return movement loading in the several longitudinal positions is determined based on the condition of the vessel after the first movement has been realised and more particular the horizontal position of the vessel. Preferably at different transverse locations in each longitudinal position loading is realised during the first movement and the return movement.

## Description

The subject invention relates to a method for introducing particulate material in a vessel, such as a barge, being anchored alongside a quay with a loading device, which can move relative to said quay to different longitudinal loading positions, wherein said loading device is moved the first time from one end to the other end of the vessel and returned from the other end to the first end, wherein during each movement the vessel is loaded in the several loading positions.

Such a method is generally known in the art. In such a method an operator is present at the loading installation for controlling loading of the particulate material in the vessel. Based on its experience a vessel is loaded. Furthermore, on board of the vessel one or more persons are present to monitor the loading proceedings. It is aimed that loading is effected in a relatively low number of steps on the one hand, but on the other hand damage to the structure of the vessel because of stresses based on uneven loading should be prevented. Furthermore, at the end of the loading proceedings the vessel should be filled with the particulate material, whilst it is substantially horizontal relative to the waterline.

From GB 2082141 an apparatus is known for removing grain from a vessel. A complicated crane structure is proposed. DE 19530112 A 1 discloses a device for automatically loading and unloading of a vessel. Based on the outer dimensions thereof a crane structure is controlled. US 4218168 A discloses a slope or list sensor which is provided to prevent rolling of the vessel during loading.

The subject invention aims to provide a method for introducing particulate material in a vessel which can be highly automated.

According to the invention this is realised in that during the first movement at each longitudinal position a predetermined quantity of particulate material is loaded in the vessel, at the end of the first movement the deviation of the longitudinal axis of the vessel from a predetermined position is determined and based on this deviation distribution of the remaining particulate material to be loaded in longitudinal direction is calculated and discharged at the several longitudinal positions.

According to the invention during the first step of loading, at different longitudinal positions a predetermined quantity of material is entered into the vessel. This quantity is independent of the actual position of the vessel and is only dependent on the required quantity of material to be loaded and the specific properties of the vessel. Only after a substantial part of the particulate material is entered in the vessel at the end of the first movement at either end of the vessel, the position of the vessel in longitudinal direction is determined with a sensor and more particular a deviation thereof relative to an "ideal" line. Based on the deviation of this ideal line it is determined how loading will be effected during the return movement of the loading installation. This means that no longer a standard quantity of particulate material is discharged in the several longitudinal positions at the return movement, but that based on the quantity of material to be discharged in the vessel after the first movement and the longitudinal position of the vessel relative to the water line, quay respectively, in each longitudinal position more or less material is discharged in the vessel. This means that at the end sufficient material is entered in the vessel, whilst the position thereof is also near ideal.

If the vessel is relatively wide it is possible to distinguish in each longitudinal position to three or more transverse positions for discharging particulate material. Loading should be effected preferably such that in adjacent longitudinal positions the transverse positions are not on the same longitudinal line to keep stresses in the vessel as low as possible and to also prevent rolling of the vessel relative to the water line.
According to the invention a special pattern is used for both discharging during the first movement and the return movement.

The loading of the vessel according the invention can be effected automatically. Preferably still a person is present of the vessel to monitor the operation of loading. To be exactly informed preferably the loading installation comprises a display on which particulars of the loading process are displayed. Preferably such person has a remote control to influence advancement of the loading.

The invention also relates to a loading installation for a vessel comprising a loading device arranged on a quay and being processor controlled with regard to the weight/volume of its discharge, the longitudinal and transverse position of the discharge end relative to said quay, a sensor device operative to determine the position of a vessel relative to said quay, a processor for said loading device being arranged to have the loading device make a full first movement and a full return movement along said vessel, and to stop at discrete loading positions, said processor having calculating means in which based on the input from said sensor at the end of the first movement the load to be discharged at each of the discharged positions during the return movement is determined. The accuracy of the sensor should be relatively high. As an example a two axis tilt sensor with accuracy of 0,001° and a measuring range of ±15° is used.

Except from automatically loading the vessel, also the start and end position of the discharge end of the second container can automatically be found.

The invention will be further elucidated referring to the enclosed drawings, wherein:
Fig. 1 schematically shows an installation for loading a vessel;
Fig. 2 shows in side view schematically the vessel according to fig. 1; and
Fig. 3 schematically shows in plan view several loading positions.

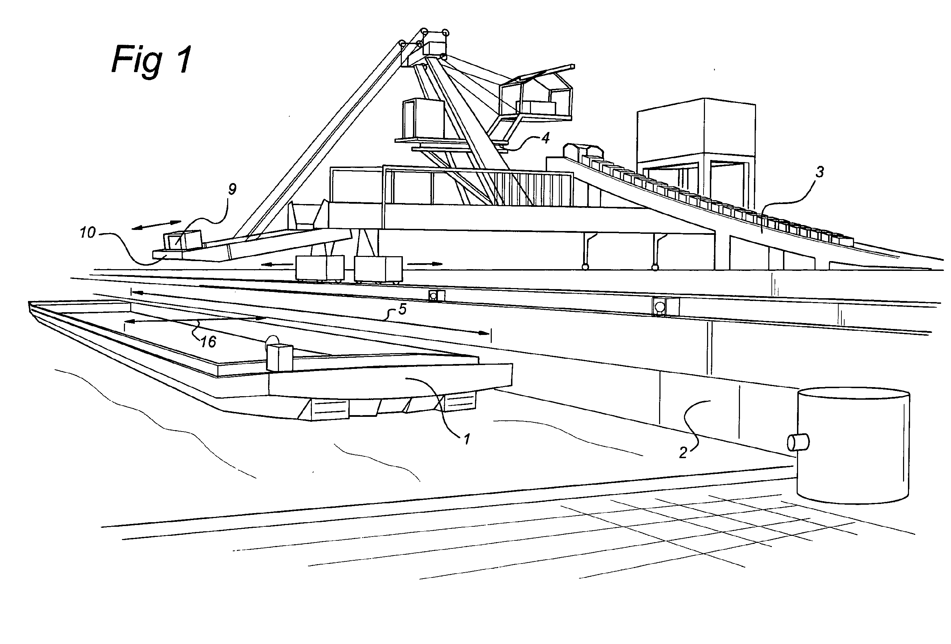

In fig. 1 a vessel such as a barge 1 to be loaded with particulate material is generally indicated by 1. An example of such a barge is a so-called European II barge. This barge 1 is anchored alongside a quay 2. On quay 2 a first conveyor 3 and a second conveyor 4 are provided. The arrangement is such that the discharge end 10 of the second conveyor 4 can move in longitudinal direction of the quay (to the ends of the vessel) over the full length of the vessel (direction of arrow 5) and the discharge end 10 can move in transverse direction as is indicated by arrow 16 over the full width of the barge 1. To that end rails are provided along which the first conveyor 3 can move and furthermore telescopic means or other devices are present to provide movement in transverse direction. Furthermore it is possible that the first conveyor 3 can move in longitudinal direction.

Such devices are used for loading particulate material such as ore.

At the discharge end a relatively large display 9 is provided. This display gives information to persons present on the barge. This information can comprise all kind of information as will be elucidated below.

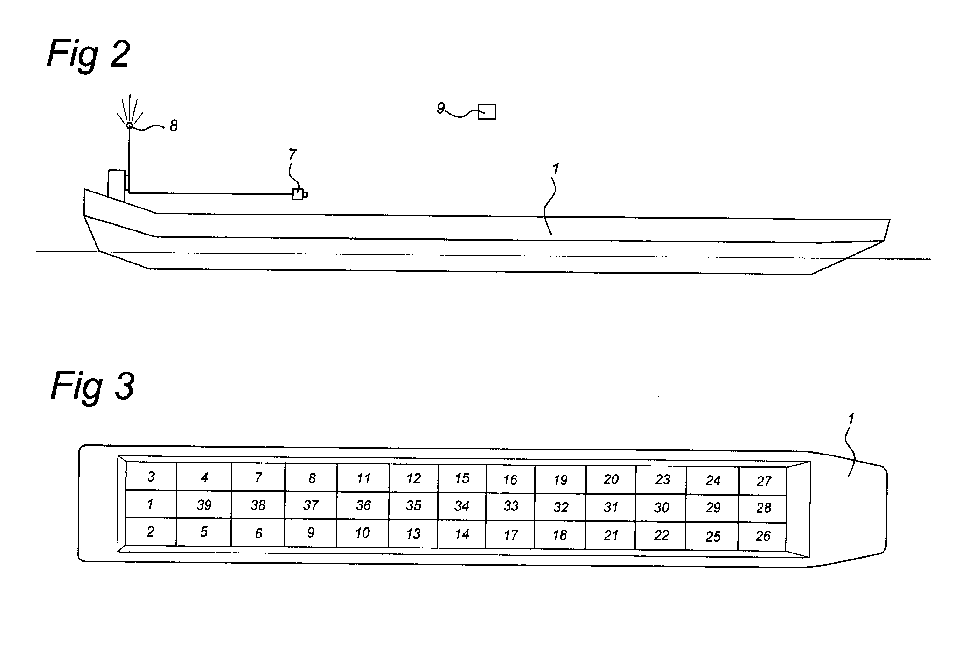

As is clear from fig. 2 on the vessel a sensor 7 is provided. The sensor is able to measure the deviation of the vessel from a pure horizontal position. These deviations are deviations in longitudinal direction and transverse direction (roll). These deviations are transmitted by transmitter 8 to the schematically shown processor connected to display 9 which can be in one of the conveyor devices or at an other quay location.

For loading a vessel the following sequence is used. Starting from an initial position the second conveyor, and more particular its discharge end 10, is brought to several discrete unloading positions wherein particulate material is discharged in the vessel. After termination the first full movement over the length of the vessel there is a return movement in which also loading is effected at the several discrete loading positions. Loading with two movements is used to prevent to much local stresses in the vessel and too considerable deviation from the ideal horizontal position thereof. During the first movement in longitudinal direction, preferably at each longitudinal position discharge is realised at a different transverse position. During the return movement of each loading position the quantity of material can be adapted to compensate deviation.

In fig. 3 an example for loading a vessel is shown wherein for each longitudinal loading position there are three transverse loading positions. However, it should be understood that according to the invention it is possible to effect more than two longitudinal movements and to use less transverse loading positions or more for each longitudinal position.

It is clear from fig. 3 that preferably during the first movement in adjacent longitudinal positions the transverse position will change. I.e. if a first discrete longitudinal position is the centre transverse position, the next adjacent longitudinal position will generally not be such centre transverse position. During the return movement basically a straight line will be followed, having possible slight transverse deviations for compensation.

Although the contents of such vessels is accurately known it is not possible to simple use a standard weight or volume of particulate material for each position. If this were to be used at the end there would be considerable deviations from the desired distribution of the load.

According to the invention automatisation is obtained in that starting from the data of the vessel and required quantity of particulate material to be loaded, first, according to a fixed predetermined pattern particulate material is loaded. E.g. referring to fig. 3 positions 1-27 are used in which a predetermined quantity of material in each position is discharged in the vessel. Of course, the quantity material in a position can be different from the quantity of material to be discharged in a different position.

Based on mathematical methods it is calculated what at the end of each loading step should be the inclination angle in longitudinal direction.

The actual values thereof are determined by sensor 7 and transmitted to processor 9. Based on the desired values in processor 9 and based on the remaining quantity of material to be loaded in the vessel, it is determined how much material in each of the positions 28-39 should be discharged. It will be understood that if the front of the vessel 1 is e.g. risen too much above water level at position 28 relatively more material and at position 39 relatively less material will be discharged. The same relates to small deviations in transverse direction during unloading at steps 28-39.

During this process the relevant data can be displayed through display 9. Normally on the vessel at least one person will be present, who monitors loading of the vessel and this person can, if necessary, make corrections. To that end a remote control device is present acting on processing device 9. It will be understood that the conveyor used can be chosen depending on the material to be loaded in the vessel. Instead of a belt conveyor a crane can be used.

Although the invention has been elucidated referring to a preferred embodiment of the invention, the person skilled in the art will immediately recognize that further variants are possible being within the scope of the appended claims and obvious in view of the above.

## Claims

1. Method for introducing particulate material in a vessel, such as a barge, being anchored alongside a quay with a loading device, which can move relative to said quay to different longitudinal loading positions, wherein said loading device is moved the first time from one end to the other end of the vessel and returned from the other end to the first end, wherein during each movement the vessel is loaded in the several loading positions, **characterized in that**, that during the first movement at each longitudinal position a predetermined quantity of particulate material is loaded in the vessel, at the end of the first movement the deviation of the longitudinal access of the vessel from a predetermined position is determined and based on this deviation distribution of the remaining particulate material to be loaded in longitudinal direction is calculated and discharged at the several longitudinal positions.

2. Method according to claim 1, wherein each longitudinal loading position comprises at least two transverse positions, wherein during the first movement loading is at a first transverse position and during the second return movement loading is at a second transverse position.

3. Method according to claim 2, wherein in adjacent longitudinal positions the first and second position are different in longitudinal direction.

4. Method according to claim 2 and 3, wherein at the end of the first movement deviation of the transverse access of the vessel from a predetermined position is determined and based on this deviation distribution of the remaining bulk material to be loaded in transverse direction is calculated and discharged in the several transverse positions.

5. A method according to one of the preceding claims, wherein the vessel is loaded according to the pattern of fig. 3.

6. Loading installation for a vessel (1) comprising a loading device (3, 4) arranged on a quay (2) and being processor controlled with regard to the weight/volume of its discharge, the longitudinal and transverse position of the discharge end relative to said quay, a sensor device (7) operative to determine the position of a vessel (1) relative to said quay (2), a processor for said loading device being arranged to have the loading device make a full first movement and a full return movement along said vessel, and to stop at discrete loading positions, said processor having calculating means in which based on the input from said sensor at the end of the first movement the load to be discharged at each of the discharged positions during the return movement is determined.

7. Loading installation according to claim 6, comprising a display for displaying information about the loading process which is arranged on the loading installation/quay respectively and can be monitored from the vessel.
